# EUROPEAN PATENT APPLICATION

(11) **EP 4 070 648 A1**
(43) Date of publication of application: **12.10.2022**
(21) Application number: 20895686.2
(22) Date of filing: 01.09.2020
(51) Int. Cl.: A01G 17/04

(54) **DEVICE FOR SUPPORTING TREE STRUCTURES**

(30) Priority: 03.12.2019 ES 201931976 U
(71) Applicant: Barrero Beltrán, Juan, 28342 Valdemoro (Madrid) (ES); Cruz Lencero, José María, 28019 Madrid (ES)
(72) Inventor: Barrero Beltrán, Juan, 28342 Valdemoro (Madrid) (ES); Cruz Lencero, José María, 28019 Madrid (ES)
(74) Representative: Pons
(86) International application number: PCT/ES2020/000039
(87) International publication number: WO 2021/111016

(57) **Abstract**

The invention relates to a device for supporting tree structures, characterised in that it comprises a hinged base platform that pivots about a first shaft, a telescopic column fixed to the platform, a seating cradle with a simultaneously foldable and rotatable adaptive ball joint, and comprising a shock-absorbing element to prevent damage to the tree structure, and a cable connecting a fixed point to the area of the column that is distal with respect to the hinged base platform.

## Description

### OBJECT OF THE INVENTION

The present invention relates to a device for providing ground support for tree branches and trunks that may have stability problems and may be the cause of their collapse. The aim of the device is to prevent said collapse by adapting to the tree or branch it supports, facilitating the ergonomics thereof so that said tree or branch can continue with its own movement and natural development.

### BACKGROUND OF THE INVENTION

The devices that currently exist cause, in most cases, unwanted friction on the bark and areas of the tree's vascular system that will later give rise to open wounds that can lead to the entry of wood-decomposing pathogens. In other cases, hangings occur at the points where said support has been installed, seriously and directly compressing the areas that are in contact with the specimen, giving rise to losses in the proper functioning of the tree's vascular system.

On the other hand, the methodology used to date is based on customised nonreusable bearing supports, which prevents them from being repositioned, thereby increasing costs in the event that the support must be reinstalled, and forcing the entire positioning process to be repeated in order to prevent the collapse of the trunk or branch that will be supported as it grows both longitudinally and in thickness.

Reinstalling the referenced devices would cause new wounds at each repositioning point. These devices, therefore, do not respect the structural integrity of the tree and are considerably more expensive since they are specific for a single point of the specimen. An example of the foregoing, and by way of comparison, are the models CN208370491U, CN104094811A-B and FR2914339A1, in which a single vertical shock-absorbing element is observed on the central beam, without the possibility of adapting the device to the natural oscillating movement of the supporting structure, causing damage due to friction and strangulation at the point where the device comes in contact with the tree or branch from the very moment it is installed.

These devices also do not have a minimum capacity for movement at the base of the device together with the stand that acts as an anchor for it.

Our device, unlike those already mentioned, offers adaptability and ergonomics, maintaining great versatility both at the base thereof, together with the stand anchored to the ground, and at the area of contact with the tree, thereby absorbing, through a series of shock-absorbing elements/springs, the different oscillations caused by movements (wind, real weight) and accompanying the branch/trunk in its growth and natural development (increase in thickness and length), without causing damage at any time during all the processes, either during installation, accompaniment or, of course, during successive repositionings. This considerably lowers costs, since said device pays for itself by being able to be reused on different specimens or different parts of the same tree, thereby respecting the physical integrity of the tree structure, contributing to the conservation and recovery of specimens with a certain landscape, ornamental and cultural value.

### DESCRIPTION OF THE INVENTION

The device for supporting tree structures is made up of three main elements and has the following configuration:
A- Hinged base platform: (It is the base of the device).

It fixes and enables the device to be adapted to the ground, providing the ideal angle of inclination with respect to the tree or branch it supports. It offers a margin of rotation to improve said adaptation.

It is implemented with a steel wind cable anchored to the "Telescopic Column" to prevent the device from falling in the event that the supported part of the tree undergoes unwanted sudden movement (wind).

B- Telescopic column: (It is the backbone of the device).

Its main function is to bear the load of the element it supports while the telescopic configuration thereof enables it to be ideally adapted to reach the necessary length from the ground to the point of contact with the tree.

C- Seating cradle with adaptive ball joint: (It is the core of the device).

It is the component of the device that comes into direct contact with the tree it supports, providing ergonomics and adaptation to the natural development thereof, and also offering the necessary shock-absorbing element to dissipate oscillating movements caused by the thrust of the wind, rain, snow, etc. and prevent unwanted wounds due to friction.

### BRIEF DESCRIPTION OF THE DRAWINGS

The drawings of the invention and tables (lists of materials) are provided below, wherein each of the components, accessories and parts are given as a brief description of the functionality of each one for better understanding.
Figure 1: General view of the device supporting a tree structure.
Figure 2: Device for supporting tree structures. Main components.
Figure 3: Component A, Hinged base platform.
Figure 4: Component B, Telescopic column.
Figure 5: Component C, Seating cradle with adaptive ball joint.
Figure 6: Component C, Seating cradle with adaptive ball joint. Front detailed view.

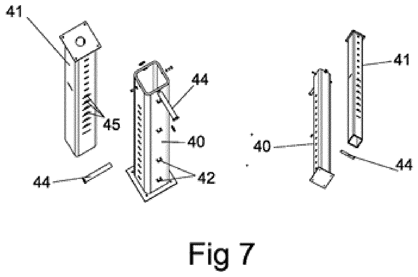

Figure 7: Component B, Telescopic column. Two exploded views.

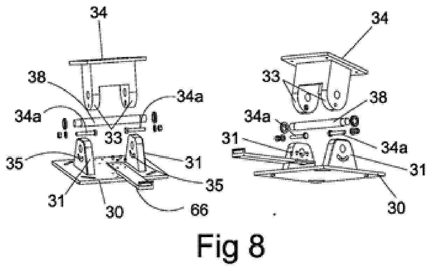

Figure 8: Component A, Hinged base platform. Two exploded views.
Figure 9: Component C, Seating cradle with adaptive ball joint: exploded detail and assembly of the folding joint thereof.

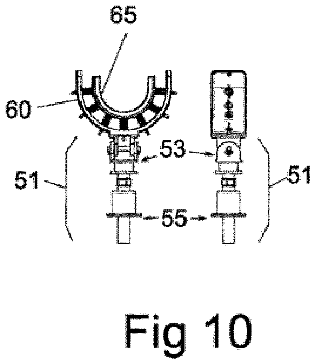

Figure 10: Component C, Seating cradle with adaptive ball joint. Front and side view.
Figure 11: Component C, Seating cradle with adaptive ball joint. Joint and exploded perspective view.
Figure 12: Component C, Seating cradle with adaptive ball joint. Exploded view of the axial rotation joint thereof.

### DESCRIPTION OF A PRACTICAL EMBODIMENT OF THE INVENTION

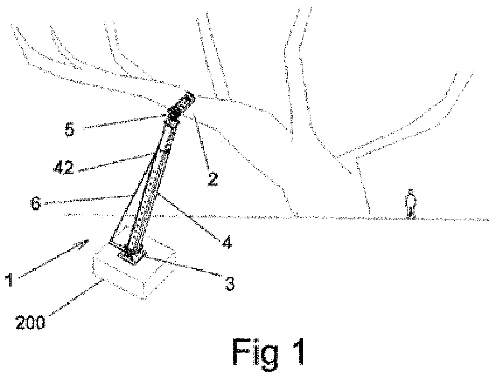

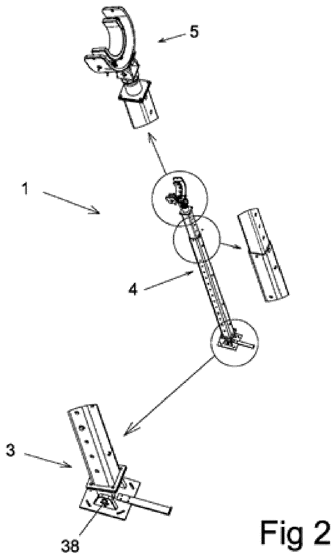

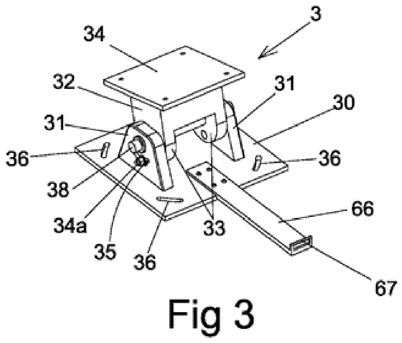

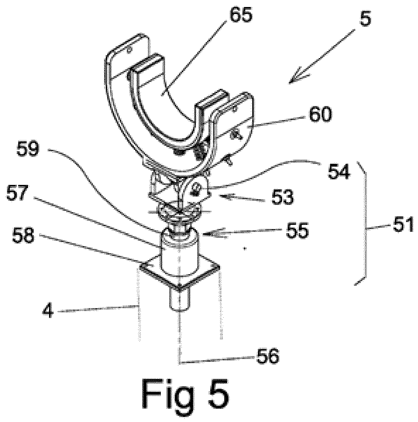

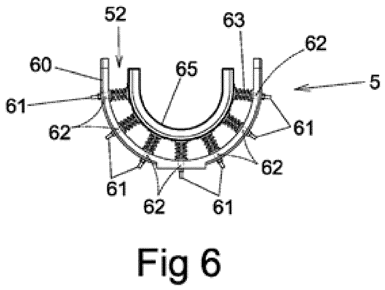

The device (1) for supporting tree structures (2) of the invention comprises (see Figs. 1 and 2):
- a hinged base platform (3) that pivots about a first shaft (38) (see also Fig. 3),
- a telescopic column (4) that is fixed to the hinged base platform (3),
- a seating cradle (5) with a simultaneously foldable and rotatable adaptive ball joint (51) (see also Fig. 5), and comprising a shock-absorbing element (52) (see Fig. 6) to prevent damage to the tree structure (2), and
- a cable (6) (return to Fig. 1) connecting a fixed point to the area of the column (4) that is distal with respect to the hinged base platform (3).

Preferably, the hinged base platform (3) comprises (see Fig. 3):
- an anchor plate (30) for anchoring to a concrete pad (200) shown in Fig. 1, with the corresponding anchor bars thereof, not shown,
- parallel flanges (31) emerging from the anchor plate (30),
- a rocker arm (32) provided with a projection (33) intended to be fixed on the flanges (31), wherein the first shaft (38) rotatably connects the rocker arm (32) to the flanges (31), and wherein the rocker arm (32) comprises an upper fixing (34) for fixing the column (4). This configuration is simple and very robust.

Ideally, the rocker arm (32) comprises rotation stops about the flanges (31), to prevent the assembly from collapsing in the event the brace (6) breaks, protecting the tree and people. In this case, said stops have an amplitude of 40 positive and negative degrees with respect to the vertical for this purpose, and in this specific example, they comprise lugs (34a) protruding laterally from the rocker arm (32) and running through angular grooves (35) of the parallel flanges (31).

It has also been envisaged that the anchor plate (30) comprises elongated holes (36) for the position-adjustable passage of the anchor bars of the pad (200).

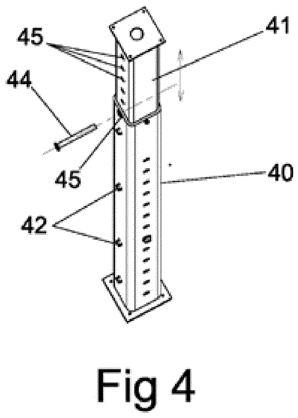

Ideally, the telescopic column (4) comprises (see Fig. 4) at least two telescopic sections (40, 41) with extending interlocking means (pins (44) passing through aligned holes (45) in both sections (40, 41) for example) to be able to adjust to trees of different heights.

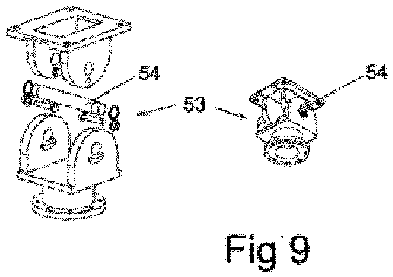

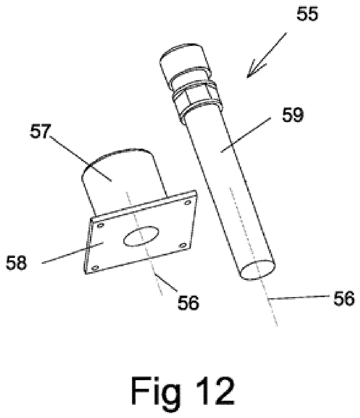

As for the simultaneously foldable and rotatable adaptive ball joint (51), in this example (see Fig. 5) it comprises:
- a folding joint (53) (see also Fig. 9) about a second shaft (54) substantially perpendicular to the column (4), and
- an axial rotation joint (55) (see also Fig. 12) about a third shaft (56) perpendicular to the second shaft (54). In this example, said axial rotation joint (55) comprises a bushing (57) arranged on a joining plate (58) at the end of the column (4), and a rotating rod (59) coinciding with the third shaft (56) and inserted into the bushing (57).

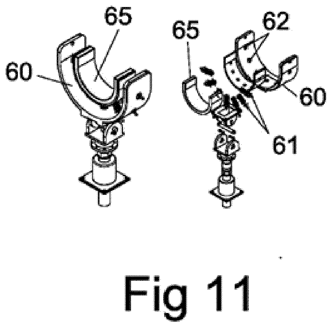

Moreover, the shock-absorbing element (52) of the cradle (5) (see Fig. 6) comprises a first fork (60) integral with the fixing (51), a second fork (65) where the tree structure (2) rests, radial guides (61) protruding from the second fork (65) and inserted into holes (62) (see also Fig. 11) in the first fork (60), and comprising springs (63) coaxial with said guides (61) arranged between the first fork (60) and the second fork (65).

It has been envisaged that rings (42) have been arranged on the column (4) (return to Figs. 1 and 4) for the distal end of the brace (6), the anchor plate (30) (see Fig. 3) comprising a side arm (66) provided with a hook (67) to configure the fixed point at which the proximal end of the brace (6) is fixed.

Having sufficiently described the nature of the invention, in addition to the manner of implementing it, it must be stated that the details of the aforementioned arrangements represented in the attached figures can be modified as long as they do not alter the fundamental principle of the invention.

## Claims

1. A device (1) for supporting tree structures (2), **characterised in that** it comprises:
- a hinged base platform (3) that pivots about a first shaft (38),
- a telescopic column (4) that is fixed to the hinged base platform (3),
- a seating cradle (5) with a simultaneously foldable and rotatable adaptive ball joint (51), and comprising a shock-absorbing element (52) to prevent damage to the tree structure (2), and
- a cable (6) connecting a fixed point to the area of the column (4) that is distal with respect to the hinged base platform (3).

2. The device (1) for supporting tree structures (2) according to claim 1, **wherein** the hinged base platform (3) comprises:
- an anchor plate (30),
- parallel flanges (31) emerging from the anchor plate (30), 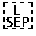
- a rocker arm (32) provided with a projection (33) intended to be fixed on the flanges (31),
wherein the first shaft (38) rotatably connects the rocker arm (32) to the flanges (31), and wherein the rocker arm (32) comprises an upper fixing (34) for fixing the column (4).

3. The device (1) for supporting tree structures (2) according to claim 2, **wherein** the rocker arm (32) comprises rotation stops about the flanges (31).

4. The device (1) for supporting tree structures (2) according to claim 3, **wherein** the stops have an amplitude of 40 positive and negative degrees with respect to the vertical.

5. The device (1) for supporting tree structures (2) according to claim 3 or 4, **wherein** the stops comprise lugs (34a) protruding laterally from the rocker arm (32) and running through angular grooves (35) of the parallel flanges (31).

6. The device (1) for supporting tree structures (2) according to any of claims 2 to 5, **wherein** the anchor plate (30) comprises elongated holes (36) for the position-adjustable passage of the emerging anchor bars of a pad (200).

7. The device (1) for supporting tree structures (2) according to any of the preceding claims, **wherein** the telescopic column (4) comprises at least two telescopic sections (40, 41) with extending interlocking means.

8. The device (1) for supporting tree structures (2) according to any of the preceding claims, **wherein** the simultaneously foldable and rotatable adaptive ball joint (51) comprises:
- a folding joint (53) about a second shaft (54) substantially perpendicular to the column (4), and
- an axial rotation joint (55) about a third shaft (56) perpendicular to the second shaft (54).

9. The device (1) for supporting tree structures (2) according to claim 8, **wherein** the axial rotation joint (55) comprises a bushing (57) arranged on a joining plate (58) at the end of the column (4), and a rotating rod (59) coinciding with the third shaft (56) and inserted into the bushing (57).

10. The device (1) for supporting tree structures (2) according to claim 9, **wherein** the shock-absorbing element (52) of the cradle (5) comprises a first fork (60) integral with the fixing (51), a second fork (65) where the tree structure (2) rests, radial guides (61) protruding from the second fork (65) and inserted into holes (62) in the first fork (60), and comprising springs (63) coaxial with said guides (61) arranged between the first fork (60) and the second fork (65).

11. The device (1) for supporting tree structures (2) according to any of the preceding claims, **wherein** the column (4) comprises rings (42) for the distal end of the brace (6).

12. The device (1) for supporting tree structures (2) according to any of claims 2 to 11, **wherein** the anchor plate (30) comprises a side arm (66) provided with a hook (67) to configure the fixed point at which the proximal end of the brace (6) is fixed.
